# FASCICULE DE BREVET EUROPEEN

(11) **EP 1 503 009 B1**
(45) Date de publication et mention de la délivrance du brevet: **10.05.2006**
(21) Numéro de dépôt: 03356117.6
(22) Date de dépôt: 29.07.2003
(51) Int. Cl.: E04H 15/64, E04D 5/14

(54) **Garniture d'étanchéité pour profilé d'ancrage de membrane de couverture**
Abdichtungsgarnitur für das Befestigungprofil einer Abdeckungsplane
Sealing layer for covering sheet anchoring element

(43) Date de publication de la demande: 02.02.2005
(73) Titulaire: Robin, Pierre, 38090 Vaulx Milieu (FR)
(72) Inventeur: Robin, Pierre, 38090 Vaulx Milieu (FR)
(74) Mandataire: Bratel, Gérard

(56) Documents cités:
- DE-A- 4 326 471
- FR-A- 2 489 678
- FR-A- 2 647 490
- US-A- 3 611 649
- US-A- 3 895 468
- US-A- 5 823 704

## Description

La présente invention concerne le domaine technique de la couverture de bâtiments, chapiteaux, tentes ou analogue au moyen de membranes souples ou toiles textiles.

Dans le domaine ci-dessus il est connu de mettre en oeuvre, pour la fixation de la membrane sur sa structure porteuse, un profilé d'ancrage constitué d'un corps destiné à être fixé sur la structure porteuse ou support. Le corps du profilé généralement réalisé en aluminium est alors pourvu d'au moins une et, de manière générale, de deux gorges destinées à recevoir un bourrelet d'ancrage porté par la membrane. Un tel mode d'ancrage de la membrane de couverture et le profilé utilisé sont notamment décrits dans le document FR 2 647 490.

Une telle technique donne généralement satisfaction en ce qui concerne l'ancrage mécanique et le maintien de la membrane textile. Toutefois, en fonction des dimensions de la membrane utilisée, il est nécessaire de mettre en oeuvre plusieurs tronçons de profilé d'ancrage disposés bout à bout pour assurer l'immobilisation d'un même bord de la membrane. Il peut alors se poser des problèmes d'étanchéité à l'air et à l'eau au niveau de ces profilés d'ancrage.

Ces problèmes sont de deux ordres. D'une part, à chaque aboutement entre deux profilés d'ancrage consécutifs fixés sur le support, il apparaît un espace par lequel l'eau et l'air chargé de polluants atmosphériques peuvent s'infiltrer. D'autre part, la fixation des profilés d'ancrage sur la structure du support, généralement se fait par une vis ou un goujon traversant une ouverture ménagée dans le profilé et il peut également se produire des infiltrations par cette ouverture.

Un but de l'invention est donc de disposer de moyens qui permettent d'assurer une étanchéité efficace et pérenne au niveau des points ou des lignes d'accrochage de la membrane de couverture sur la structure porteuse, pour éviter les infiltrations dans les zones d'aboutement des profilés et dans les zones de fixation de ceux-ci.

Afin d'atteindre ce but, l'invention concerne une garniture d'étanchéité pour une pluralité de profilés d'ancrage d'une membrane de couverture de bâtiment alignés sur un même support, profilés constitués chacun d'un corps comprenant au moins une gorge de réception d'un bourrelet d'ancrage porté par la membrane et des ouvertures destinées à recevoir des moyens de fixation du profilé sur un support.

Selon l'invention, cette garniture d'étanchéité comprend au moins une gaine susceptible de recouvrir la surface d'au moins l'une des gorges de réception et de s'étendre longitudinalement entre au moins deux profilés d'ancrage consécutifs.

Grâce à cette garniture, l'espace ménagé entre deux profilés consécutifs, au niveau d'une gorge de réception, est étanchéifié par une gaine recouvrant la gorge de réception de chaque profilé. La garniture dont la longueur totale correspond à la somme des longueurs de chacun des profilés permet donc de réaliser une étanchéité continue s'étendant sur toute la longueur du support.

En outre, elle comprend un dos recouvrant la face extérieure du profilé d'ancrage qui s'étend depuis l'une des gaines.

Le dos, qui fait partie de la garniture, réalise l'étanchéité de la face extérieure du profilé. Or, les ouvertures permettant de recevoir les organes de fixation débouchent dans cette face. La garniture d'étanchéité permet d'obturer ces ouvertures et interdit donc toute infiltration d'eau ou de polluants atmosphériques par ces dernières, et par les zones des plans d'aboutement disposées entre deux gorges de réception du profilé.

Selon un mode de réalisation particulièrement avantageux, la garniture comprend deux gaines recouvrant deux gorges d'ancrage, le dos s'étendant entre les deux gaines.

La garniture d'étanchéité ainsi définie est donc parfaitement adaptée au profilé et réalise ainsi un gainage parfaitement étanche et continu d'une pluralité de profilés alignés sur un même support.

De plus, la gaine est conformée pour épouser la surface intérieure de la gorge tout en laissant subsister un espace de réception du bourrelet d'ancrage de la membrane et permettre le passage de celle-ci

La garniture assure en outre l'étanchéité avec la membrane de couverture. En effet, sous l'effet de la tension qui lui est appliquée, le bourrelet d'ancrage se plaque contre la garniture et forme ainsi une liaison étanche et continue entre la membrane et son dispositif de fixation. Si des micro infiltrations se produisaient entre la surface de la membrane et la garniture, les éventuelles eaux d'infiltration seraient recueillies dans la partie basse de la gaine pour s'écouler à l'une des extrémités de la gaine. L'étanchéité est là encore préservée.

Selon une possibilité, la garniture d'étanchéité est réalisée en matière plastique extrudée, la garniture pouvant être réalisée en polyéthylène, en polychlorure de vinyle ou en thermoplastique élastomère.

Diverses autres caractéristiques de l'invention ressortent de la description effectuée en référence aux dessins annexés qui illustrent une forme non limitative de réalisation d'une garniture d'étanchéité selon l'invention.

La figure 1 est une coupe transversale d'une garniture d'étanchéité selon l'invention, adaptée sur un profilé d'ancrage pour une membrane de couverture de bâtiment.

La figure 2 est une vue longitudinale selon le plan II-II de la figure 1.

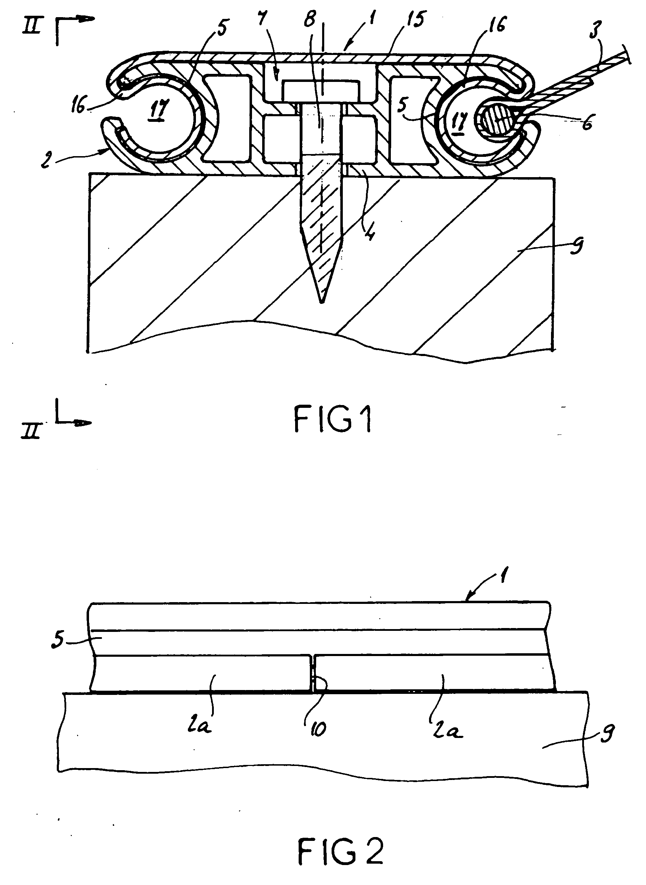

Une garniture d'étanchéité selon l'invention telle, qu'illustrée à la figure 1, et désignée dans son ensemble par la référence 1, est destinée à envelopper un profilé d'ancrage 2 pour une membrane 3 de couverture de bâtiment.

De manière générale, le profilé 2 comprend un corps 4 qui est pourvu d'au moins une, et selon l'exemple illustré, de deux gorges 5 de réception d'un bourrelet d'ancrage 6 porté par la membrane 3.

Selon l'exemple illustré, les gorges 5 présentent une forme générale en C et sont disposées de part et d'autre du corps 4 du profilé 2. Celui-ci présente une partie centrale 7 destinée à la mise en place de moyens de fixation 8 du profilé 2 sur une structure porteuse. Les moyens de fixation 8 sont par exemple constitués par des tire-fond traversant la partie centrale 7 du profilé 2 et venant s'engager dans une poutre en bois lamellé-collé constitutive de la structure porteuse 9.

Selon les dimensions de la membrane de couverture 3 ou la conformation du support 9, il peut apparaître nécessaire de mettre en oeuvre plusieurs tronçons de profilé 2ₐ, 2_{b} disposés bout à bout comme illustré à la figure 2. Dans la mesure où il existe une discontinuité au niveau du plan de l'aboutement 10 existant entre les deux tronçons de profilé 2ₐ, 2_{b} disposés bout à bout, l'invention propose de recouvrir la face des profilés 2ₐ, 2_{b} orientée vers l'extérieur, soit à l'opposé du support 9, au moyen de la garniture d'étanchéité 1.

Afin d'assurer une parfaite étanchéité, la garniture 1 s'étend à l'intérieur des gorges d'ancrage 5 de manière à se trouver pincée entre le profilé 2 et le bourrelet 6 lors de la mise en place de la toile 3.

La garniture d'étanchéité 1 est alors adaptée sur le profilé 2 avant la mise en place de la membrane 3.

Selon une forme préférée de réalisation telle qu'illustrée à la figure 1, la garniture d'étanchéité 1 est réalisée en matière plastique extrudée, tel que par exemple du polyéthylène. Celle-ci pourrait également être réalisée en polychlorure de vinyle ou en thermoplastique élastomère.

La garniture 1 présente alors un dos 15 de part et d'autre duquel s'étendent deux gaines 16 conformées de manière à présenter une forme complémentaire de celle de l'intérieur des gorges de réception 5. Selon l'exemple illustré, les gaines latérales 16 sont conformées en C de manière à épouser la surface intérieure de chaque gorge de réception 5, tout en laissant subsister un espace 17 de réception du bourrelet d'ancrage 6. Il est à noter que, compte tenu de la forme des gaines 16, la garniture 1 présente selon l'exemple illustré une forme générale en Ω.

La garniture 1 peut être obtenu par extrusion de matière synthétique et est alors adaptée de manière à pouvoir être conditionnée sous forme de rouleau.

La mise en place de la garniture 1 peut être effectuée soit par enfilage le long des tronçons de profilé 2ₐ, 2_{b}, soit par emboîtement des ailes 16 dans les gorges 5 par déformation des ailes 16.

Il est à noter que dans la mesure où le dos 15 est conformée pour couvrir la face extérieure du profilé 2, elle recouvre également les moyens de fixation 8 et assure ainsi une parfaite étanchéité tant au niveau de l'aboutement 10 entre deux profilés 2ₐ, 2_{b}, consécutifs, qu'au niveau de la fixation des profilés 2 sur le support 9.

La garniture d'étanchéité ainsi décrite présente donc de nombreux avantages. Elle permet, notamment d'assurer une étanchéité continue entre des profilés d'ancrage de membrane ainsi qu'une étanchéité de la face extérieure de ces profilés qui présente par construction des ouvertures susceptibles de laisser passer de l'eau ou des polluants atmosphériques.

Il va de soi que l'invention n'est pas limitée au mode de réalisation décrit ci-dessus à titre d'exemple mais qu'elle en embrasse au contraire toutes les variantes de réalisation.

Ainsi la garniture 1 ne pourrait présenter qu'une seule gaine 16 et comporter, à l'opposé de la gaine 16, un bord tombé destiné à recouvrir le profilé 2, ou encore la gaine 16 ne pourrait réaliser qu'un recouvrement partiel de la gorge de réception.

## Revendications

1. Garniture d'étanchéité pour une pluralité de profilés d'ancrage (2) d'une membrane (3) de couverture de bâtiment, profilés constitués chacun d'un corps (4) comprenant au moins une gorge de réception (5) d'un bourrelet d'ancrage porté par la membrane (3) et au moins une ouverture destinée à recevoir des moyens de fixation d'un profilé sur un support (9),
**caractérisée en ce qu'**elle est comprend au moins une gaine (16) susceptible de recouvrir la surface d'au moins l'une des gorges de réception (5) et de s'étendre longitudinalement entre au moins deux profilés d'ancrage (2) consécutifs, un dos (15) recouvrant la face extérieure du profilé d'ancrage (2), qui s'étend depuis l'une des gaines (16).

2. Garniture d'étanchéité selon la revendication 1, **caractérisée en ce qu'**elle comprend deux gaines (16) recouvrant deux gorges de réception (5), le dos (15) s'étendant entre les deux gaines (16).

3. Garniture d'étanchéité selon l'une des revendications 1 à 2, **caractérisée en ce que** la gaine (16) est conformée en C de façon à épouser la surface intérieure de la gorge (5) tout en laissant subsister un espace (17) de réception du bourrelet d'ancrage (6).

4. Garniture d'étanchéité selon l'une des revendications 1 à 3, **caractérisée en ce qu'**elle est réalisée en matière plastique extrudée.

5. Garniture d'étanchéité selon l'une des revendications 1 à 4, **caractérisée en ce qu'**elle est réalisée en polyéthylène, en polychlorure de vinyle ou en thermoplastique élastomère.

## Patentansprüche

1. Abdichtungsgarnitur für mehrere Profile (2) zur Verankerung einer Gebäudeabdeckmembran (3), wobei die Profile jeweils aus einem Körper (4) bestehen, der mindestens eine Nut (5) zur Aufnahme einer an der Membran (3) vorgesehenen Verankerungswulst und mindestens eine zur Aufnahme von Mitteln zur Befestigung eines Profils an einem Träger (9) bestimmte Öffnung aufweist,
**dadurch gekennzeichnet, dass** sie mindestens eine Hülle (16), die die Fläche mindestens einer der Aufnahmenuten (5) bedecken und sich in Längsrichtung zwischen mindestens zwei aufeinander folgenden Verankerungsprofilen (2) erstrecken kann, und eine die Außenfläche des Verankerungsprofils (2) bedeckende Schulter (15), die sich von einer der Hüllen (16) aus erstreckt, umfasst.

2. Abdichtungsgarnitur nach Anspruch 1, **dadurch gekennzeichnet, dass** sie zwei Hüllen (16) umfasst, die zwei Aufnahmenuten (5) bedecken, wobei sich die Schulter (15) zwischen den beiden Hüllen (16) erstreckt.

3. Abdichtungsgarnitur nach Anspruch 1 oder 2, **dadurch gekennzeichnet, dass** die Hülle (16) C-förmig geformt ist, so dass sie sich an die Innenfläche der Nut (5) anpasst, wobei ein Raum (17) zur Aufnahme der Verankerungswulst (6) verbleibt.

4. Abdichtungsgarnitur nach einem der Ansprüche 1 bis 3, **dadurch gekennzeichnet, dass** sie aus extrudiertem Kunststoffmaterial hergestellt ist.

5. Abdichtungsgarnitur nach einem der Ansprüche 1 bis 4, **dadurch gekennzeichnet, dass** sie aus Polyethylen, aus Polyvinylchlorid oder aus thermoplastischem Elastomer hergestellt ist.

## Claims

1. Sealing layer for a plurality of anchoring elements (2) for anchoring a covering sheet (3) for a building, which elements each consist of a body (4) comprising at least one groove (5) for receiving an anchoring spline borne by the sheet (3) and at least one opening intended to receive means for fastening an element to a support (9), **characterized in that** the sealing layer comprises at least one sheath (16) which is able to cover the surface of at least one of the receiving grooves (5) and to extend longitudinally between at least two consecutive anchoring elements (2), a top side (15) covering the outer face of the anchoring element (2), which extends from one of the sheaths (16).

2. Sealing layer according to Claim 1, **characterized in that** it comprises two sheaths (16) covering two receiving grooves (5), the top side (15) extending between the two sheaths (16).

3. Sealing layer according to either of Claims 1 and 2, **characterized in that** the sheath (16) is C-shaped so as to match the inner surface of the groove (5) while leaving a space (17) for receiving an anchoring spline (6).

4. Sealing layer according to one of Claims 1 to 3, **characterized in that** it is made of extruded plastic.

5. Sealing layer according to one of Claims 1 to 4, **characterized in that** it is made of polyethylene, polyvinyl chloride or thermoplastic elastomer.
